Europäisches Patentamt

European Patent Office

Office européen des brevets

(11) Veröffentlichungsnummer: **0 046 483**

**A2**

(12) # EUROPÄISCHE PATENTANMELDUNG

(21) Anmeldenummer: 81104256.3

(22) Anmeldetag: 03.06.81

(51) Int. Cl.³: **G 03 B 19/10**
**D 06 F 33/02**

(30) Priorität: 13.08.80 DE 3030607

(43) Veröffentlichungstag der Anmeldung:
03.03.82 Patentblatt 82/9

(84) Benannte Vertragsstaaten:
CH DE FR GB IT LI SE

(71) Anmelder: Bosch-Siemens Hausgeräte GmbH Stuttgart
Patent- und Vertragswesen Hochstrasse 17
D-8000 München 80(DE)

(72) Erfinder: Stehr, Thomas, Dipl.-Ing.
Rohrweihstrasse 11
D-1000 Berlin 27(DE)

(72) Erfinder: Graf, Richard, Dipl.-Ing.
Rieppelstrasse 18
D-1000 Berlin 13(DE)

(54) Elektronischer Programmwahlschalter.

(57) Bei einem elektronischen Programmwahlschalter für eine von einem Programmsteuergerät gesteuerte Wäschebehandlungsmaschine mit Gruppen von Schaltern zur Auswahl von erforderlichen Parametern wie Grundprozeßablaufpläne und Prozeßtemperaturen sowie für zusätzliche wählbare Prozeßparameter besteht die Aufgabe, nur eine bestimmte Reihenfolge der Anwahl von erforderlichen und zusätzlich wählbaren Parametern zuzulassen und eine Doppelbedienung von Parametern der gleichen Gruppe zu verhindern.

Die Lösung dieser Aufgabe besteht darin, daß jeder Schalter (21 bis 24) einen Aktivierungseingang (211, 221, 231, 241) und einen Ausgang (212, 222, 232, 242) zur Quittierung seiner Betätigung hat und daß alle Schalter derselben Gruppe (2) für erforderliche Parameter untereinander sich ausschließend verknüpft sind und die Gruppen untereinander hierarchisch sich ausschließend verknüpft sind.

EP 0 046 483 A2

Croydon Printing Company Ltd.

**0046483**

BOSCH-SIEMENS HAUSGERÄTE GMBH
Stuttgart

Hochstraße 17, den 22.05.1981
8000 München 80

TZP 80/212 E

## Elektronischer Programmwahlschalter

Die Erfindung geht aus von einem elektronischen Programmwahlschalter für eine von einem Programmsteuergerät gesteuerte Wäschebehandlungsmaschine mit Gruppen von Schaltern zur Anwahl von erforderlichen Parametern wie Grundprozeßablaufpläne und Prozeßtemperaturen sowie für zusätzlich wählbare Prozeßparameter.

Bei mit elektronischen Programmsteuergeräten ausgestatteten Wäschebehandlungsmaschinen soll den Bedienungspersonen die Möglichkeit eröffnet werden, die einzelnen Prozeßdaten wie Ablaufpläne, Temperaturen, sowie die zusätzlich wählbaren Prozeßparameter, die auf unterschiedliche Verschmutzungsarten und Beladungsmengen der Wäsche sowie auf unterschiedliche Wäschefaserarten Rücksicht nehmen, nach ihren Wünschen individuell einzuwählen.

Die Erfindung löst die vorstehende Aufgabe dadurch, daß jeder Schalter einen Aktivierungseingang und einen Ausgang zur Quittierung seiner Betätigung hat und daß alle Schalter derselben Gruppe für erforderliche Parameter untereinander sich ausschliessend verknüpft sind und die Gruppen untereinander hierarchisch sich ausschließend verknüpft sind. Eine derartige Ordnung
der Schalter und Gruppen läßt die jeweilige Zuordnung von
erforderlichen und zusätzlich wählbaren Parametern in entsprechende Schaltergruppen zu, welche der Bedienungsperson
augenfällig im Bedienungsfeld einer Maschine vorgeführt werden können.

Eine besonders einfache Ausgestaltung der Erfindung besteht
darin, daß die hierarchische Verknüpfung eine Mischstufe enthält, welche die Ausgänge der Schalter einer Gruppe mit den
Eingängen der Schalter der hierarchisch untergeordneten Gruppe
verbindet.

In einer besonders vorteilhaften Weiterbildung der Erfindung
ist die Mischstufe nach der untersten Gruppe für erforderliche
Parameter mit den Eingängen eines Startschalters und zweier
Zeitgeber verbunden, von denen der erste Zeitgeber nach seinem
Ablauf alle Signale von den Eingängen der Schalter abschaltet
und der zweite Zeitgeber nach seinem Ablauf das durch die eingegebenen Parameter eingestellte Programmsteuergerät startet.
Diese Weiterbildung der Erfindung bedeutet für die Bedienungsperson eine wesentliche Arbeits-und Auswahlerleichterung. Nach
Ablauf des ersten Zeitgebers werden alle Aufforderungen zu weiteren Bedienungshandlungen zurückgenommen und zwar erst dann,
wenn alle für einen auszuführenden Behandlungsprozeß erforderlichen Parameter eingegeben  sind. Aufforderungen zu weiteren
Prozeßhandlungen können beispielsweise im Blinken von Anzeigelämpchen bestehen, deren weiteres Blinken die Bedienungsperson
irritieren könnte. Der zweite Zeitgeber hat einen längeren Lauf
und schaltet nach seinem Ablauf den Beginn des angewählten Programmes, das statt des zweiten Zeitgebers auch vom Startschalter gestartet werden kann. Die Anordnung des zweiten Zeitgebers
hat die zusätzlichen Vorteile, daß das angewählte Behandlungsprogramm auch dann abläuft, wenn die Bedienungsperson das Starten vergessen hat. Außerdem kann die Ablaufdauer des zweiten
Zeitgebers auch dazu benutzt werden, den Anlauf des angewählten Programmes bis zu einer gewünschten Startzeit zu verzögern.
Dazu ist es auch möglich, den zweiten Zeitgeber mit einer Einrichtung zu verbinden, durch die sich seine Ablaufdauer einstellen läßt.

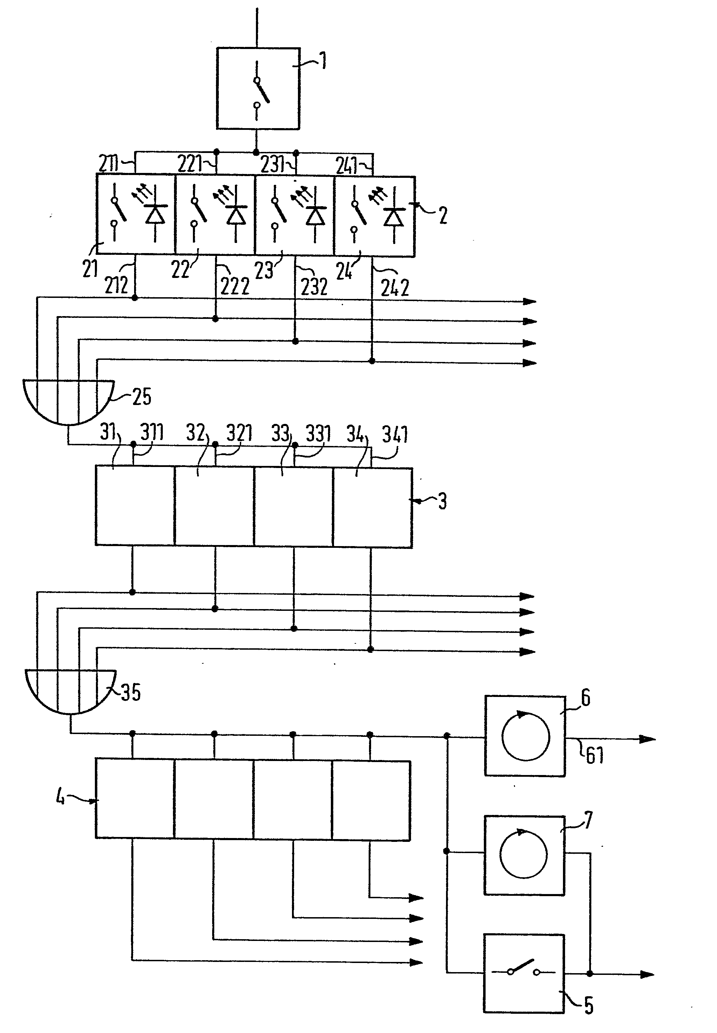

Anhand des in der Zeichnung dargestellten Ausführungsbeispieles für den elektronischen Programmwahlschalter ist die Erfindung nachstehend erläutert.

Der Programmwahlschalter enthält ein Einschaltmodul 1, mit dem
die Bedienungsperson den elektronischen Programmwahlschalter
aktivieren kann. Ihm nachgeordnet ist eine Gruppe 2 von
Schaltmodulen 21 bis 24, welche je einen Aktivierungseingang
211,221,231 und 241 sowie je einen Ausgang 212,222,232 und 242
zur Quittierung seiner Betätigung und zum Anwählen je einen
Tastschalter und je eine Leuchtdiode zur Anzeige seiner Wählbarkeit (Blinken)oder Quittierung seiner Wahl (Dauerlicht) hat.

Die anderen Gruppen 3 und 4 von Schaltmodulen sind gleichartig
aufgebaut. Alle Schaltmodule in jeder Gruppe sind untereinander so verknüpft, daß immer nur dann einer der Tastschalter
eines Schaltmodules betätigt werden kann, wenn die zugeordnete
Leuchtdiode Blinklicht zeigt. Im Augenblick der Wahl dieses
Schaltmodules wird die zugeordnete Leuchtdiode sofort auf Dauerlicht umgeschaltet und die Aktivierung aller Eingänge der Schaltmodule dieser Gruppe abgeschaltet. Am Ausgang des gewählten
Schaltmodules liegt dann ein der Quittierung seiner Betätigung
zugeordnetes Signal an, das auf einer der Vielfachleitungen
nach rechts in das angeschlossene (nicht dargestellte) Programmsteuergerät und nach links in die zugeordnete Mischstufe 25 bzw.
35 geleitet wird. Die jeweilige Mischstufe aktiviert dann die
Eingänge der Schaltermodule der hierarchisch untergeordneten
Gruppe, die Mischstufe 25 also die Eingänge der Gruppe 3. Daraufhin werden alle oder ein Teil (je nach Zuordnung zu einer betreffenden Wahl der Vorgruppe 2) der Schaltmodule der Gruppe 3 zur Betätigung freigegeben, was durch Blinken der zugeordneten Leuchtdiode angezeigt wird. Die Bedienungsperson kann dann in derselben Weise mit den Tastschaltern der Gruppe 3 verfahren wie bei der Gruppe 2.

Die Mischstufe 35 der Gruppe 3 leitet die Ausgangssignale der Schaltmodule der Gruppe 3 an die Eingänge der Schaltmodule der Gruppe 4 weiter, die beispielsweise für zusätzlich wählbare Prozeßparameter vorgesehen ist. Außerdem wird das Ausgangssignal auch an die Eingänge des Startschalters 5 und zweier Zeitgeber 6 und 7 geführt, von denen der erste Zeitgeber 6 nur einen kurzen Ablauf von beispielsweise 15 Sekunden hat. Nach seinem Ablauf gibt er auf seine Ausgangsleitung 61 ein Signal, durch das ausgehend vom Programmsteuergerät alle Signale von den Eingängen der Schaltmodule der Gruppen abgeschaltet werden. Der zweite Zeitgeber 7 liegt parallel zum Startschalter 5 und kann beim Fehlen der Betätigung des Startschalters nach seinem Zeitablauf den lmpuls zum Starten des Programmes an das durch die Schaltmodule der Gruppen eingestellte Programmsteuergerät abgeben. Die Ablaufzeit des zweiten Zeitgebers 7 kann beispielsweise fest eingestellt 6 Stunden betragen oder durch eine nicht dargestellte Einrichtung variierbar sein.

## Patentansprüche

1. Elektronischer Programmwahlschalter für eine von einem Programmsteuergerät gesteuerte Wäschebehandlungsmaschine mit Gruppen von Schaltern zur Anwahl von erforderlichen Parametern wie Grundprozeßablaufpläne und Prozeßtemperaturen sowie für zusätzlich wählbare Prozeßparameter, d a d u r c h  g e k e n n z e i c h n e t , daß jeder Schalter (21 bis 24) einen Aktivierungseingang (211, 221, 231, 241) und einen Ausgang (212, 222, 232, 242) zur Quittierung seiner Betätigung hat und daß alle Schalter derselben Gruppe (2) für erforderliche Parameter untereinander sich ausschließend verknüpft sind und die Gruppen untereinander hierarchisch sich ausschließend verknüpft sind.

2. Programmwahlschalter nach Anspruch 1, dadurch gekennzeichnet, daß die hierarchische Verknüpfung eine Mischstufe (25) enthält, welche die Ausgänge (212, 222, 232, 242) der Schalter (21 bis 24) einer Gruppe (2) mit den Eingängen (311, 321, 331, 341) der Schalter (31 bis 34) der hierarchisch untergeordneten Gruppe (3) verbindet.

3. Programmwahlschalter nach Anspruch 2, dadurch gekennzeichnet, daß die Mischstufe (35) nach der untersten Gruppe (3) für erforderliche Parameter mit den Eingängen eines Startschalters (5) und zweier Zeitgeber (6 und 7) verbunden ist, von denen der erste Zeitgeber (6) nach seinem Ablauf alle Signale von den Eingängen (211, 221, 231, 241, 311, 321, 331, 341) der Schalter (21 bis 24, 31 bis 34) abschaltet und der zweite Zeitgeber (7) nach seinem Ablauf das durch die eingegebenen Parameter eingestellte Programmsteuergerät startet.

0046483
TZP 80/212